# EUROPEAN PATENT SPECIFICATION

(11) **EP 2 012 474 B1**
(45) Date of publication and mention of the grant of the patent: **30.04.2014**
(21) Application number: 07290852.8
(22) Date of filing: 06.07.2007
(51) Int. Cl.: H04L 12/931, H04W 88/12, H04W 92/14

(54) **Network node for a radio access network**
Netzwerkknoten für ein Funkzugangsnetzwerk
Noeud de réseau pour réseau d'accès radio

(43) Date of publication of application: 07.01.2009
(73) Proprietor: Alcatel Lucent, 75007 Paris (FR)
(72) Inventor: Mirelli, Giacomo, 20061 Crugate (Milano) (IT); de Blasio, Giuseppe, 00135 Roma (IT); Frecassetti, Mario G.L., 24100 Bergamo (IT)
(74) Representative: Shamsaei Far, Hassan

(56) References cited:
- EP-A- 0 388 951
- EP-A- 1 014 747
- WO-A-00/42789
- US-A1- 2004 190 548
- US-B1- 6 735 191
- US-B1- 6 751 214

## Description

### Field of the Invention

The present invention generally relates to the field of radio access networks. In particular, the present invention relates to a network node of a radio access network and to a radio access network comprising such a node. Further, the present invention relates to a method of processing traffic at a node of a radio access network.

### Background Art

It is known that a radio access network allows a plurality of users provided with respective radio terminals (e.g. mobile phones, PDAs, laptop PCs, etc.) to access a number of telephone services and/or data services (such as Internet access, text message services and multimedia message services, e-mail, etc.). Exemplary radio access networks are the GSM (Global System for Mobile communications), the UMTS (Universal Mobile Telecommunications System) and the WiMAX (Worldwide Interoperability for Microwave Access).

A radio access network typically comprises a plurality of network nodes (or simply nodes), wherein each node comprises one or more access devices. Each access device has a coverage area and it is capable of exchanging traffic via radio with radio terminals located within its coverage area. For instance, in a GSM radio access network the access devices are called BTS (Base Station Transceiver).

Typically, the nodes of a radio access network are connected to one another according to a tree logical topology, wherein each terminal node is connected to an upstream node and wherein each intermediate node is connected to at least one downstream node and to one upstream node. Each node is connected to adjacent nodes (both downstream and upstream) either by means of wireless transceivers (e.g. microwave transceivers) or by means of wired transceivers. The root of the tree logical topology corresponds to a traffic collection center. For instance, in a GSM radio access network the traffic collection center is termed BSC (Base Station Controller).

A radio access network is typically configured to transport a plurality of traffic flows across the tree logical topology. In the following description and in the claims, the expression "upstream traffic flow" or simply "upstream flow" will designate a traffic flow transported from a node to the traffic collection center. Besides, the expression "downstream traffic flow" or simply "downstream flow" will designate a traffic flow transported from the traffic collection center to a node.

In particular, the transceivers connecting each node of a radio access network to the adjacent nodes are typically configured to transmit and receive TDM (Time Division Multiplexing) traffic flows which may be either synchronous (e.g. SDH or Sonet tributaries) or plesiochronous (e.g. PDH tributaries).

By assuming that a terminal node comprises n access devices (wherein n≥ 1), the terminal node typically receives through each of the n access devices an upstream flow comprising traffic transmitted by radio terminals located within its coverage area. Therefore, the terminal node typically performs a TDM multiplexing of the n received upstream flows, and it transmits the n multiplexed upstream flows to the intermediate node located immediately upstream.

By assuming that the intermediate node is connected only to the terminal node, and that it further comprises m access devices (wherein m≥ 1), the intermediate node receives the n multiplexed upstream flows from the terminal node. Further, typically, the intermediate node receives through each of the m access devices an upstream flow comprising traffic transmitted by radio terminals located within its coverage area. Therefore, the intermediate node typically performs a TDM multiplexing of the n+m received upstream flows, and it transmits the n+m multiplexed upstream flows to the intermediate node located immediately upstream.

Recently, telephone and data services are becoming even more widespread, wherein traffic is transmitted by the radio terminals to the access devices in form of packets, such as IP packets, Ethernet packets, ATM cells, etc.

Since nowadays nodes comprise transceivers (either wireless or wired) configured to transmit and receive only TDM traffic flows, transmission of packets across a radio access network typically requires mapping the packets in a TDM upstream flow supported by the node transceivers. Then, after the packets have been mapped in the TDM upstream flow, the TDM upstream flow can be possibly multiplexed with other upstream traffic flows, and finally it can be transmitted in the upstream direction by means of one of the wireless or wired transceivers.

WO 00/42789 discloses a method, apparatus, and transmission format enabling packets carrying different types of information to be assigned different priority levels and to be forwarded accordingly. In one embodiment, packets include an indication as to whether they have a high priority (e.g., interactive speech), a low priority (e.g., non-interactive speech), etc. Packets with low priority are queued and delayed until packets with a high priority are forwarded. Examples of non-interactive speech include voice mail, computer-generated menus, e-mail to/from speech, etc.

### Summary of the invention

However, the above known solution for transporting upstream traffic flows across a radio access network implies some drawbacks.

First of all, transmitting traffic in the form of TDM upstream flows disadvantageously is rather inefficient from the bandwidth usage point of view. Indeed, each TDM upstream flow has permanently allocated a given upstream bandwidth independently of the actual amount of traffic transported by the TDM upstream flow. In other words, upstream bandwidth allocated to a given TDM upstream flow which is totally or partially unused by the TDM upstream flow can not be re-allocated to another TDM upstream flow.

Secondly, when the radio access network supports services requiring transmission of packets, mapping packets in TDM upstream flows requires a very complex node architecture. Indeed, mapping packets in

TDM upstream flows disadvantageously requires to connect each node, wherein packets are received from radio terminals through an access device, to an external device which is configured to receive the packets from the node, to map the packets in a TDM upstream flow, and to transmit the TDM upstream flow back to the node. Such an external device should be connected between the access device through which packets are received and the TDM switch performing TDM multiplexing of the TDM upstream flows.

Accordingly, the present invention addresses the problem of providing a network node of a radio access network which overcomes the aforesaid problems, i.e. which allows to exploit the upstream bandwidth in a more efficient way and which is capable of transporting packets without requiring connection to an external device.

According to a first aspect, the present invention provides a node of a radio access network, comprising: a first input module for receiving a first upstream traffic flow of a first format from a first further node of the radio access network; and at least a second input module for receiving a second upstream traffic flow of a second format different from the first format. The first input module is configured to process the first upstream traffic flow thus generating first packets of a predetermined packet format, and to include in each of the first packets a first information indicative of a quality of service of the first upstream traffic flow; the at least a second input module is configured to process the second upstream traffic flow thus generating second packets of the predetermined packet format, and to include in each of the second packets a second information indicative of a quality of service of the second upstream traffic flow; the node further comprises a packet switch configured to multiplex the first packets and the second packets according to the first information and at least the second information thus originating an output upstream flow of packets of the predetermined packet format; and the node comprises an output module configured to output the upstream flow of packets of the predetermined packet format from the node in an upstream direction of the radio access network.

Preferably, the second input module is further configured, when the first upstream traffic flow comprises a time division multiplexing flow, to discard the second packets comprising portions of the second upstream traffic flow which do not transport any traffic.

Profitably, the second input module is further configured, when the second upstream traffic flow comprises third packets of a packet format different from the predetermined packet format, to encapsulate the third packets in the second packets of the predetermined packet format.

According to first embodiments, the second input module is configured to receive the second upstream traffic flow from a second further node of the radio access network.

According to other embodiments, the node further comprises an access device having a coverage area and being configured to exchange traffic with a plurality of radio terminals located within the coverage area, and the at least second input module is configured to receive the second upstream traffic flow from the access device.

According to a second aspect, the present invention provides a radio access network comprising a node as set forth above.

According to a third aspect, the present invention provides a method of processing traffic at a node of a radio access network. The method comprises the following steps: a) receiving a first upstream traffic flow of a first format from a first further node of the radio access network; b) receiving at least a second upstream traffic flow of a second format different from the first format. The method further comprises the following steps: c) processing the first upstream traffic flow thus generating first packets of a predetermined packet format; d) including in at least one of the first packets a first information indicative of a quality of service of the first upstream traffic flow; e) processing the at least second upstream traffic flow thus generating second packets of the predetermined packet format; f) including in at least one of the second packets a second information indicative of a quality of service of the second upstream traffic flow; g) multiplexing the first packets and the second packets according to the first information and at least the second information thus originating an output upstream flow of packets of the predetermined packet format; and h) outputting the upstream flow of packets of the predetermined packet format from the node in an upstream direction of the radio access network.

Preferably, step e) further comprises, when the first upstream traffic flow comprises a time division multiplexing flow, discarding the second packets comprising portions of the second upstream traffic flow which do not transport any traffic.

Profitably, step e) further comprises, when the second upstream traffic flow comprises third packets of a packet format different from the predetermined packet format, encapsulating the third packets in the second packets of the predetermined packet format.

### Brief description of the drawings

The present invention will become clearer from the following description, given by way of example and not of limitation, to be read with reference to the accompanying drawings wherein:
- Figure 1 schematically shows an exemplary radio access network;
- Figure 2 schematically shows the structure of one of the intermediate nodes of the network of Figure 1, according to an embodiment of the present invention;
- Figure 3 schematically shows the upstream traffic flows received and processed by the intermediate node of Figure 2; and
- Figure 4 schematically shows an exemplary upstream flow output by the intermediate node of Figure 2.

### Detailed description of preferred embodiments of the invention

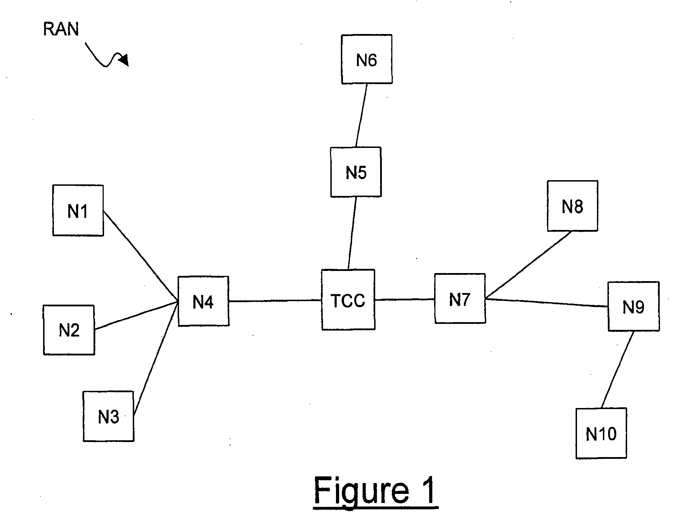

Figure 1 schematically shows an exemplary radio access network RAN. The radio access network RAN comprises ten nodes N1, N2, ..., N10 connected each other according to a tree logical topology. Although in Figure 1 connections between adjacent nodes are represented by lines, such connections may be either wired connections or wireless connections.

In particular, nodes N1, N2 and N3 are terminal nodes connected to the intermediate node N4, which is in turn connected to a traffic collection center TCC. Further, the node N6 is a terminal node which is connected to the intermediate node N5, which is in turn connected to the traffic collection center TCC. Further, the node N10 is a terminal node which is connected to the intermediate node N9, which is in turn connected to the intermediate node N7. Finally, the terminal node N8 is connected to the intermediate node N7.

Herein after, the structure and operation of the intermediate node N4 according to an embodiment of the present invention will be described in detail. Although the following detailed description refers to the intermediate node N4, this is non limiting, since the following considerations apply to any intermediate node of the radio access network RAN of Figure 1.

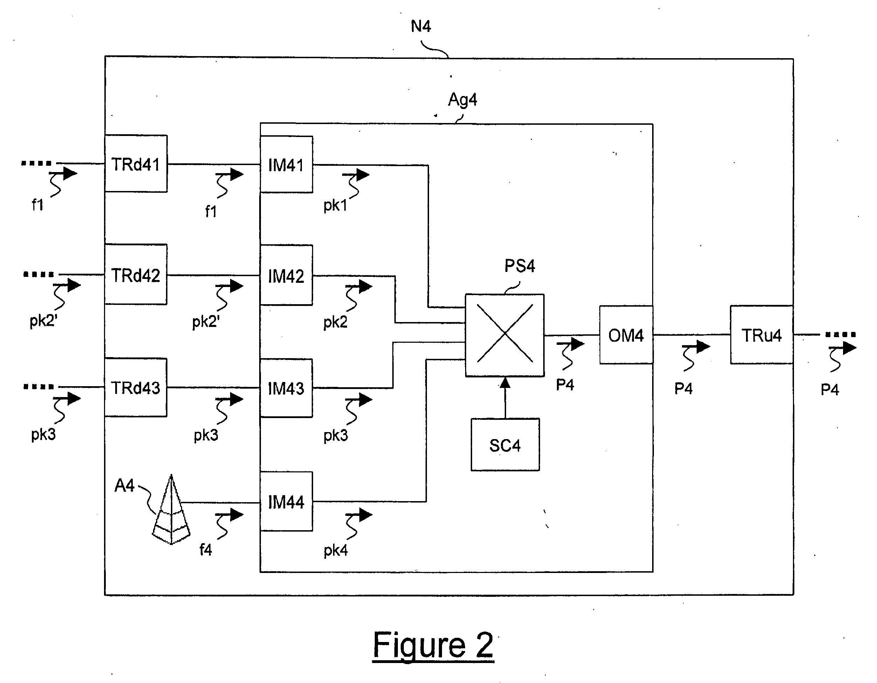

By referring to Figure 2, the intermediate node N4 preferably comprises an access device A4, a first downstream side transceiver TRd41, a second downstream side transceiver TRd42, a third downstream side transceiver TRd43, an upstream side transceiver TRu4 and an aggregator Ag4. The intermediate node N4 may comprise other devices which are not shown in Figure 2 since they are not relevant to the present description.

Preferably, the first downstream side transceiver TRd41 is configured to exchange traffic with the upstream side transceiver of the terminal node N1 (not shown in Figure 2), so that the node N4 is connected to the node N1. Further, preferably, the second downstream side transceiver TRd42 is configured to exchange traffic with the upstream side transceiver of the terminal node N2 (not shown in Figure 2), so that the node N4 is connected to the node N2. Further, preferably, the third downstream side transceiver TRd43 is configured to exchange traffic with the upstream side transceiver of the terminal node N3 (not shown in Figure 2), so that the node N4 is connected to the node N3.

As shown in Figure 2, the aggregator Ag4 has four inputs and an output. The four inputs are connected to the first downstream side transceiver TRd41, to the second downstream side transceiver TRd42, to the third downstream side transceiver TRd43 and to the access device A4, respectively. The output of the aggregator Ag4 is connected to the upstream side transceiver TRu4.

By referring to Figure 2, the operation of the intermediate node N4 according to an embodiment of the present invention will be described in detail, in case of transmission of upstream traffic flows.

Under the assumption that the first terminal node comprises a single access device, the first downstream side transceiver TRd41 is configured to receive an upstream flow f1 from the terminal node N1, which comprises the traffic transmitted by the radio terminals located within the coverage area of the access device of the terminal node N1. Further, the first downstream side transceiver TRd41 is configured to forward such an upstream flow f1 to the aggregator Ag4. Preferably, the upstream flow f1 is a TDM traffic flow, which may be either a synchronous tributary (e.g. an SDH or Sonet tributary) or a plesiochronous tributary (e.g. a PDH tributary).

Further, the second downstream side transceiver TRd42 is preferably configured to receive packets pk2' from the terminal node N2. Such packets pk2' for instance may comprise traffic transmitted by radio terminals located within the coverage area(s) of the access device(s) comprised within the terminal node N2. Further, the second downstream side transceiver TRd42 is configured to forward the packets pk2' to the aggregator Ag4. The packets pk2' are formatted according to a first packet format such as for instance Ethernet, IP, ATM, etc.

Further, the third downstream side transceiver TRd43 is preferably configured to receive packets pk3 from the terminal node N3. Such packets pk3 for instance may comprise traffic transmitted by radio terminals located within the coverage area(s) of the access device(s) comprised within the terminal node N3. Further, the third downstream side transceiver TRd43 is configured to forward the packets pk3 to the aggregator Ag4. In practice it may occur that the packets pk3 are formatted according to a second packet format which is different from the first packet format according to which the packets pk2' are formatted. For instance, the packets pk2' may be ATM cells, while the packets pk3 may be Ethernet packets.

Further, the access device A4 is configured to collect traffic transmitted by radio terminals located within its coverage area and to transmit such a traffic in the form of an upstream flow f4 to the aggregator Ag4. Preferably, the upstream flow f4 is a TDM traffic flow, which may be either a synchronous tributary (e.g. an SDH or Sonet tributary) or a plesiochronous tributary (e.g. a PDH tributary). The upstream flow f4 may be either of the same type of the upstream flow f1 or of a different type.

Still by referring to Figure 2, the structure of the aggregator Ag4 according to an embodiment of the present invention will be now described in detail.

The aggregator Ag4 comprises four input modules IM41, IM42, IM43 and IM44, a packet switch PS4, a switch controller SC4 and an output module OM4.

The input module IM41 is preferably connected to the first downstream side transceiver TRd41, the input module IM42 is preferably connected to the second downstream side transceiver TRd42, the input module IM43 is preferably connected to the third downstream side transceiver TRd43 and the input module IM44 is preferably connected to the access device A4.

The packet switch PS4 preferably has four inputs, each input being connected to a respective input module IM41, IM42, IM43, IM44. Further, the packet switch PS4 preferably has an output which is connected to the output module OM4. The packet switch PS4 may also have other inputs and outputs, which are not shown in Figure 2. since they are not relevant to the present description. It is assumed that the packet switch PS4 is suitable to switch packets formatted according to the second packet format according to which the packets pk3 are formatted. For instance, if the packets pk3 are Ethernet packets, the packet switch PS4 preferably is an Ethernet switch.

Finally, preferably, the output module OM4 is connected to the upstream side transceiver TRu4.

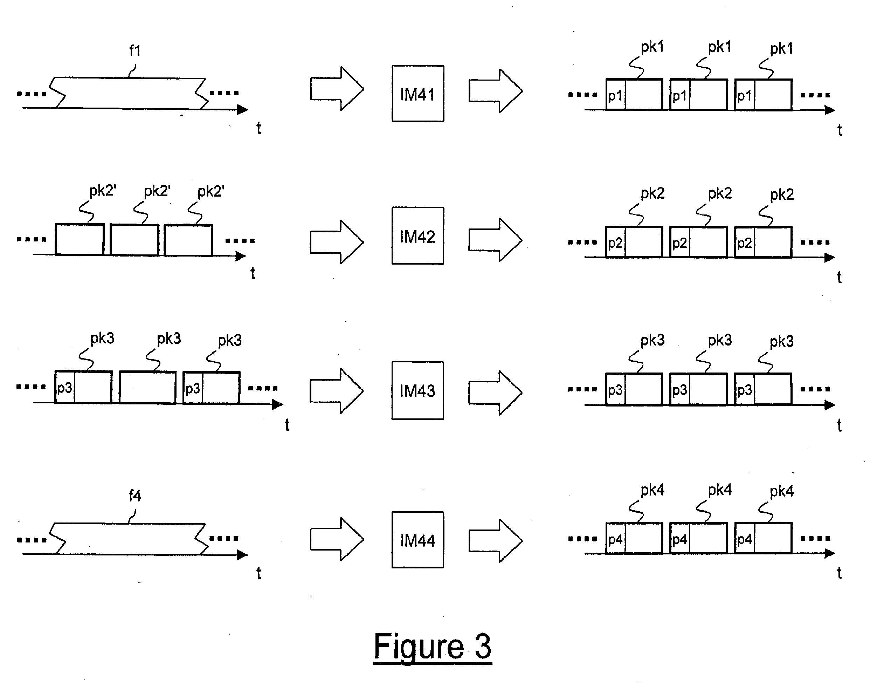

Herein after, by referring to Figure 3, the operation of the aggregator Ag4 according to an embodiment of the present invention will be described in detail.

Preferably, when the aggregator Ag4 receives the upstream flow f1 from the first downstream side transceiver TRd41 by means of the input module IM41, the input module IM41 preferably splits the upstream flow f1 in a sequence of first packets pk1. Preferably, the first packets pk1 are formatted according to the packet format that the packet switch PS4 is suitable to switch, i.e. the second packet format. For instance, if the packet switch PS4 is an Ethernet switch, the first packets pk1 preferably are Ethernet packets. Further, preferably, the input module IM41 inserts in each first packet pk1 a respective information p1 indicative of the packet priority. Preferably, the information p1 has a value which is dependent upon the quality of service to be guaranteed to the traffic transported by the upstream flow f1. If the upstream flow f1 transports different types of traffic requiring different quality of service, different first packets pk1 may comprise different values of the information p1. Further, preferably, the input module IM41 is capable of recognizing and discarding empty first packets pk1, i.e. first packets pk1 comprising portions of the upstream flow f1 which do not transport any traffic. Finally, the input module IM41 is configured to insert the first packets pk1 in one or more queues, each queue corresponding to a respective value of the information p1 indicative of the packet priority.

Further, preferably, when the aggregator Ag4 receives the packets pk2' from the second downstream side transceiver TRd42 by means of the input module IM42, the input module IM42 preferably encapsulates the packets pk2' in second packets pk2, thus generating a sequence of second packets pk2. Each second packet pk2 may comprise either a portion of a packet pk2', or a whole packet pk2', or more than one packet pk2'. Preferably, also the second packets pk2 are formatted according to the packet format that the packet switch PS4 is suitable to switch, i.e. the second packet format. For instance, if the packet switch PS4 is an Ethernet switch, also the second packets pk2 preferably are Ethernet packets. Further, preferably, the input module IM42 inserts in each second packet pk2 a respective information p2 indicative of the packet priority. Preferably, the information p2 has a value which is dependent upon the quality of service to be guaranteed to the traffic transported by the packets pk2'. If the packets pk2' transport different types of traffic requiring different quality of service, different second packets pk2 may comprise different values of the information p2. Finally, the input module IM42 is configured to insert the second packets pk2 in one or more queues, each queue corresponding to a respective value of the information p2 indicative of the packet priority.

Further, preferably, when the aggregator Ag4 receives the packets pk3 from the third downstream side transceiver TRd43 by means of the input module IM43, the input module IM43 preferably recognizes that the packets pk3 already are in the packet format that the packet switch PS4 is capable of switching, i.e. the second packet format. The packets pk3 will be termed in the following description "third packets". Therefore, the input module IM43 simply checks whether each third packet pk3 comprises an information indicative of the packet priority. If a third packet pk3 lacks such an information, the input module IM43 preferably inserts in such a third packet pk3 an information p3 indicative of the packet priority. Preferably, the information p3 has a value which is dependent upon the quality of service to be guaranteed to the traffic transported by the third packets pk3. If the third packets pk3 transport different types of traffic requiring different quality of service, different third packets pk3 may comprise different values of the information p3. Finally, the input module IM43 is configured to insert the third packets pk3 in one or more queues, each queue corresponding to a respective value of the information p3 indicative of the packet priority.

Finally, when the aggregator Ag4 receives the upstream flow f4 from the access device A4 by means of the input module IM44, the input module IM44 preferably splits the upstream flow f4 in a sequence of fourth packets pk4. Preferably, the fourth packets pk4 are formatted according to the packet format that the packet switch PS4 is suitable to switch, i.e. the second packet format. For instance, if the packet switch PS4 is an Ethernet switch, the fourth packets pk4 preferably are Ethernet packets. Further, preferably, the input module IM44 inserts in each fourth packet pk4 a respective information p4 indicative of the packet priority. Preferably, the information p4 has a value which is dependent upon the quality of service to be assured to the traffic transported by the upstream flow f4. If the upstream flow f4 transports different types of traffic requiring different quality of service, different fourth packets pk4 may comprise different values of the information p4. Further, preferably, the input module IM44 is capable of recognizing and discarding empty fourth packets pk4, i.e. fourth packets pk4 comprising portions of the upstream flow f4 which do not transport any traffic. Finally, the input module IM44 is configured to insert the fourth packets pk4 in one or more queues, each queue corresponding to a respective value of the information p1 indicative of the packet priority.

Therefore, by referring again to Figure 2, the packet switch PS4 receives from each input module IM41, IM42, IM43, IM44 a respective sequence of first packets pk1, second packets pk2, third packets pk3 and fourth packets pk4, which are all formatted according to a same packet format, i.e. the packet format that the packet switch PS4 is capable to switch. Each of the first packets pk1, second packets pk2, third packets pk3 and fourth packets pk4 comprises a respective information p1, p2, p3, and p4 which is indicative of the packet priority.

According to embodiments of the present invention, the packet switch PS4 (controlled by the switch controller SC4) multiplexes the packets pk1, pk2, pk3 and pk4, so as to form an output upstream flow P4. In particular, preferably, the packet switch PS4 (controlled by the switch controller SC4) performs a statistic multiplexing of the packets pk1, pk2, pk3 and pk4 according to their information p1, p2, p3 and p4 indicative of the packet priority. In other words, each packet pk1, pk2, pk3 and pk4 is transmitted at the output of the packet switch PS4 with a probability which is dependent upon the value of the information p1, p2, p3 and p4 indicative of the packet priority.

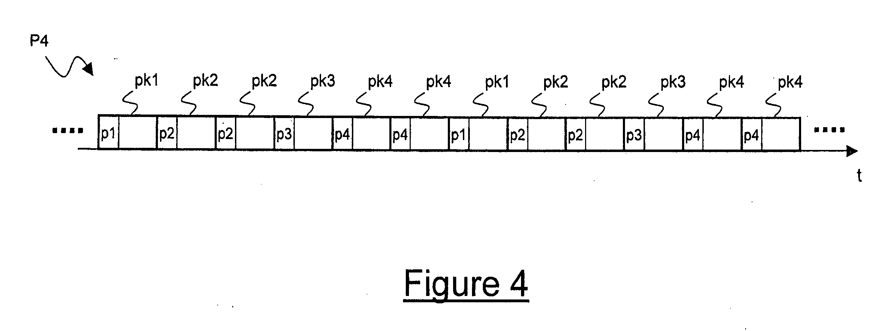

For instance, Figure 4 shows an exemplary output upstream flow P4 under the assumption that the value of the information p2 and p4 indicative of the packet priority of the packets pk2 and pk4 is twice the value of the information p1 and p3 indicative of the packet priority of the packets pk1 and pk3. Under this assumption, the packet switch PS4 (controlled by the switch controller SC4) preferably multiplexes the packets pk1, pk2, pk3 and pk4 so that the probability of transmitting the packets pk2 and pk4 at the output of the packet switch PS4 is twice the probability of transmitting the packets pk1 and pk3. In other words, the upstream bandwidth allocated for transmitting packets pk2 and pk4 at the output of the packet switch PS4 is twice the upstream bandwidth allocated for transmitting packets pk1 and pk3.

Therefore, according to this embodiment of the present invention, the upstream flows f1 and f4 and the packets pk2' and pk3 received at the intermediate node N4 are "translated" in packets which are all formatted according to a same packet format, and thus they are transmitted upstream by the intermediate node N4 as packets of the same packet format. Accordingly, nodes located upstream the intermediate node N4 (in the exemplary radio access network RAN of Figure 1 the node intermediate node N4 is directly connected to the traffic collection center TCC, but in general an intermediate node may be connected to the traffic collection center TCC by means of other intermediate nodes) advantageously receive only packets of a same packet format, and therefore they can forward such packets further upstream by means of a packet switch operation similar to the one described above.

Therefore, advantageously, the node N4 is capable of exploiting the upstream bandwidth in a more efficient way in comparison to known solutions, while preserving quality of service of each upstream flow. Indeed, splitting a TDM upstream flow in packets, discarding empty packets, including in each packet an information indicative of the packet priority and multiplexing each packet according to such an information advantageously allows to dynamically vary the upstream bandwidth allocated to the TDM flow according both to the quality of service that must be guaranteed to the traffic transported by the traffic flow and according to the actual amount of traffic transported by a traffic flow. Therefore, a higher upstream bandwidth is advantageously allocated to upstream flows having higher priority and transporting a higher actual amount of traffic.

Further, advantageously, the intermediate node N4 is capable to receive, process and transmit both TDM flows and packets without requiring the addition of any external device. Indeed, advantageously, the node N4 is capable of processing any TDM upstream flow and any packet formatted according to any packet format by translating them in respective sequences of packets having all the packet format supported by the node (i.e. by the packet switch comprised in the node).

For instance, this advantageously allows to implement a radio access network which is capable of supporting different services provided by a same provider or by different providers. Indeed, independently of the format(s) according to which the traffic associated to services is transmitted, the node according to embodiments of the present invention is advantageously capable of translating the received traffic in the packet format supported by the node, to multiplex it and to transmit it towards the traffic collection center.

Further, advantageously, the configuration of the radio access network may be upgraded in a particularly easy way. Indeed, when a new service is activated which implies transport of a new upstream flow, the network configuration can be upgraded for supporting transmission of the new upstream flow by simply inserting in the node at which the new upstream flow is originated an input module translating the new upstream flow in packets having the packet format supported by the packet switch of the node.

Further, advantageously, since each traffic flow in divided in packets, wander affecting each traffic flow is advantageously minimized.

## Claims

1. A node (N4) of a radio access network (RAN), comprising:
- a first input module (IM41) for receiving a first upstream traffic flow (f1) of a first format from a first further node (N1) of said radio access network (RAN); and
- at least a second input module (IM42, IM43, IM44) for receiving a second upstream traffic flow (pk2', pk3, f4) of a second format different from said first format,
wherein:
- said first input module (IM41) is configured to process said first upstream traffic flow (f1) thus generating first packets (pk1) of a predetermined packet format, and to include in each of said first packets (pk1) a first information (p1) indicative of a quality of service of said first upstream traffic flow (f1);
- said at least a second input module (IM42, IM43, IM44) is configured to process said second upstream traffic flow (pk2', pk3, f4) thus generating second packets (pk2, pk3, pk4) of said predetermined packet format, and to include in each of said second packets (pk2, pk3, pk4) a second information (p2, p3, p4) indicative of a quality of service of said second upstream traffic flow (pk2', pk3, f4); and
- said node (N4) further comprises a packet switch (PS4) configured to multiplex said first packets (pk1) and said second packets (pk2, pk3, pk4) according to said first information (p1) and at least said second information (p2, p3, p4) thus originating an output upstream flow of packets of said predetermined packet format (P4), and
- said node (N4) comprises an output module (OM4) configured to output said upstream flow of packets of said predetermined packet format (P4) from said node (N4) in an upstream direction of said radio access network (RAN).

2. The node (N4) according to claim 1, wherein said second input module (IM44) is further configured, when said first upstream traffic flow (f4) comprises a time division multiplexing flow, to discard said second packets (pk4) comprising portions of said second upstream traffic flow (f4) which do not transport any traffic.

3. The node (N4) according to claim 1, wherein said second input module (IM42) is further configured, when said second upstream traffic flow (pk2') comprises third packets (pk2') of a packet format different from said predetermined packet format, to encapsulate said third packets (pk2') in said second packets (pk2) of said predetermined packet format.

4. The node (N4) according to any of the preceding claims, wherein said second input module (IM42, IM43) is configured to receive said second upstream traffic flow (pk2', pk3) from a second further node (N2, N3) of said radio access network (RAN).

5. The node (N4) according to any of claims 1 to 3, wherein said node (N4) further comprises an access device (A4) having a coverage area and being configured to exchange traffic with a plurality of radio terminals located within said coverage area, and wherein said at least second input module (IM44) is configured to receive said second upstream traffic flow (f4) from said access device (A4).

6. A radio access network (RAN) comprising a node (N4) according to any of the claims 1 to 5.

7. A method of processing traffic at a node (N4) of a radio access network (RAN), comprising:
a) receiving a first upstream traffic flow (f1) of a first format from a first further node (N1) of said radio access network (RAN); and
b) receiving at least a second upstream traffic flow (pk2', pk3, f4) of a second format different from said first format,
**characterized in that** it further comprises:
c) processing said first upstream traffic flow (f1) thus generating first packets (pk1) of a predetermined packet format;
d) including in at least one of said first packets (pk1) a first information (p1) indicative of a quality of service of said first upstream traffic flow (f1);
e) processing said at least second upstream traffic flow (pk2', pk3, f4) thus generating second packets (pk2, pk3, pk4) of said predetermined packet format;
f) including in at least one of said second packets (pk2, pk3, pk4) a second information (p2, p3, p4) indicative of a quality of service of said second upstream traffic flow (pk2', pk3, f4);
g) multiplexing said first packets (pk1) and said second packets (pk2, pk3, pk4) according to said first information (p1) and at least said second information (p2, p3, p4) thus originating an output upstream flow of packets of said predetermined packet format (P4); and
h) outputting said upstream flow of packets of said predetermined packet format (P4) from said node (N4) in an upstream direction of said radio access network (RAN).

8. The method according to claim 7, wherein said step e) further comprises, when said first upstream traffic flow (f4) comprises a time division multiplexing flow, discarding said second packets (pk4) comprising portions of said second upstream traffic flow (f4) which do not transport any traffic.

9. The method according to claim 7, wherein said step e) further comprises, when said second upstream traffic flow (pk2') comprises third packets (pk2') of a packet format different from said predetermined packet format, encapsulating said third packets (pk2') in said second packets (pk2) of said predetermined packet format.

## Patentansprüche

1. Knoten (N4) eines Funkzugangsnetzwerks (RAN), umfassend:
- Ein erstes Eingangsmodul (IM41) für den Empfang eines ersten Upstream-Verkehrsflusses (f1) mit einem ersten Format von einem ersten weiteren Knoten (N1) des besagten Funkzugangsnetzwerks (RAN); und
- mindestens ein zweites Eingangsmodul (IM42, IM43, IM44) für den Empfang eines zweiten Upstream-Verkehrsflusses (pk2', pk3, f4) mit einem zweiten Format, welches sich von dem ersten Format unterscheidet,
wobei:
- das besagte erste Eingangsmodul (IM41) für die Verarbeitung des besagten ersten Upstream-Verkehrsflusses (f1), um erste Pakete (pk1) mit einem vorbestimmten Paketformats zu erzeugen, und für das Einfügen, in ein jedes der besagten ersten Pakete (pk1), einer ersten Information (p1), welche für eine Dienstgüte des besagten ersten Upstream-Verkehrsflusses (f1) indikativ ist, konfiguriert ist;
- das besagte mindestens ein zweites Eingangsmodul (IM42, IM43, IM44) für die Verarbeitung des besagten zweiten Upstream-Verkehrsflusses (pk2', pk3, f4), um zweite Pakete (pk2, pk3, pk4) mit dem besagten vorbestimmten Paketformats zu erzeugen, und für das Einfügen, in ein jedes der besagten zweiten Pakete (pk2, pk3, pk4), einer zweiten Information (p2, p3, p4), welche für eine Dienstgüte des besagten zweiten Upstream-Verkehrsflusses (pk2', pk3, f4) indikativ ist, konfiguriert ist; und
- der besagte Knoten (N4) weiterhin eine Paketvermittlungseinrichtung (PS4) umfasst, welche dafür konfiguriert ist, die besagten ersten Pakete (pk1) und die besagten zweiten Pakete (pk2, pk3, pk4) gemäß der besagten ersten Information (p1) und mindestens der besagten zweiten Information (p2, p3, p4) zu multiplexen, um einen ausgehenden Upstream-Paketfluss mit dem besagten vorbestimmten Paketformat (P4) zu erzeugen, und
- der besagte Knoten (N4) ein Ausgangsmodul (OM4) umfasst, welches für die Ausgabe des besagten Upstream-Paketflusses mit dem besagten vorbestimmten Paketformat (P4) von dem besagten Knoten (N4) in einer Upstream-Richtung des besagten Funkzugangsnetzwerks (RAN) konfiguriert ist.

2. Knoten (N4) nach Anspruch 1, wobei das besagte zweite Eingangsmodul (IM44) weiterhin dafür konfiguriert ist, die besagten zweiten Pakete (pk4), welche Teile des besagten zweiten Upstream-Verkehrsflusses (f4) umfassen, die keinen Verkehr transportieren, zu verwerfen, wenn der besagte erste Upstream-Verkehrsfluss (f4) einen Zeitmultiplex-Fluss umfasst.

3. Knoten (N4) nach Anspruch 1, wobei das besagte zweite Eingangsmodul (IM42) weiterhin dafür konfiguriert ist, wenn der besagte zweite Upstream-Verkehrsfluss (pk2') dritte Pakete (pk2') mit einem Paketformat, welches sich von dem besagten vorbestimmten Paketformat unterscheidet, umfasst, die besagten dritten Pakete (pk2') in die besagten zweiten Pakete (pk2) mit dem besagten vorbestimmten Paketformat einzukapseln.

4. Knoten (N4) nach einem beliebigen der vorstehenden Ansprüche, wobei das besagte zweite Eingangsmodul (IM42, IM43) für den Empfang des besagten zweiten Upstream-Verkehrsflusses (pk2', pk3) von einem zweiten weiteren Knoten (N2, N3) des besagten Funkzugangsnetzwerks (RAN) konfiguriert ist.

5. Knoten (N4) nach einem beliebigen der Ansprüche 1 bis 3, wobei der besagte Knoten (N4) weiterhin eine Zugangsvorrichtung (A4) umfasst, welche einen Abdeckungsbereich hat und dafür konfiguriert ist, mit einer Vielzahl von sich innerhalb des besagten Abdeckungsbereichs aufhaltenden Funkendgeräten Verkehr auszutauschen, und wobei das besagte mindestens zweite Eingangsmodul (IM44) dafür konfiguriert ist, den besagten zweiten Upstream-Verkehrsfluss (f4) von der besagten Zugangsvorrichtung (A4) zu empfangen.

6. Funkzugangsnetzwerk (RAN), umfassend einen Knoten (N4) gemäß einem beliebigen der Ansprüche 1 bis 5.

7. Verfahren zur Verarbeitung von Verkehr an einem Knoten (N4) eines Funkzugangsnetzwerks (RAN), umfassend:
a) Empfangen eines ersten Upstream-Verkehrsflusses (f1) mit einem ersten Format von einem ersten weiteren Knoten (N1) des besagten Funkzugangsnetzwerks (RAN); und
b) Empfangen mindestens eines zweiten Upstream-Verkehrsflusses (pk2', pk3, f4) mit einem zweiten Format, welches sich von dem besagten ersten Format unterscheidet,
**dadurch gekennzeichnet, dass** es weiterhin umfasst:
c) Verarbeiten des besagten ersten Upstream-Verkehrsflusses (f1), um erste Pakete (pk1) mit einem vorbestimmten Format zu erzeugen;
d) Einfügen, in mindestens eines der besagten ersten Pakete (pk1), einer ersten Information (p1), welche für eine Dienstgüte des besagten ersten Upstream-Verkehrsflusses (f1) indikativ ist;
e) Verarbeiten des besagten mindestens zweiten Upstream-Verkehrsflusses (pk2', pk3, f4), um zweite Pakete (pk2, pk3, pk4) mit dem besagten vorbestimmten Paketformat zu erzeugen;
f) Einfügen, in mindestens eines der besagten zweiten Pakete (pk2, pk3, pk4), einer zweiten Information (p2, p3, p4), welche für eine Dienstgüte des besagten zweiten Upstream-Verkehrsflusses (pk2', pk3, f4) indikativ ist;
g) Multiplexen der besagten ersten Pakete (pk1) und der besagten zweiten Pakete (pk2, pk3, pk4) gemäß der besagten ersten Information (p1) und mindestens der besagten zweiten Information (p2, p3, p4), um die Ausgabe eines Upstream-Paketfluss mit dem besagten vorbestimmten Paketformat (P4) einzuleiten; und
h) Ausgeben des besagten Upstream-Paketflusses mit dem besagten vorbestimmten Paketformat (P4) von dem besagten Knoten (N4) in einer Upstream-Richtung des besagten Funkzugangsnetzwerks (RAN).

8. Verfahren nach Anspruch 7, wobei der besagte Schritt e) weiterhin, wenn der besagte erste Upstream-Verkehrsfluss (f4) einen Zeitmultiplex-Fluss umfasst, das Verwerfen der besagten zweiten Pakete (pk4), welche Teile des besagten zweiten Upstream-Verkehrsflusses (f4) einschließen, die keinen Verkehr transportieren, umfasst.

9. Verfahren nach Anspruch 7, wobei der besagte Schritt e) weiterhin, wenn der besagte zweite Upstream-Verkehrsfluss (pk2') dritte Pakete (pk2') mit einem Paketformat, welches sich von dem besagten vorbestimmten Paketformat unterscheidet, das Einkapseln der besagten dritten Pakete (pk2') in die besagten zweiten Pakete (pk2) mit dem besagten vorbestimmten Paketformat umfasst.

## Revendications

1. Noeud (N4) d'un réseau d'accès radio (RAN), comprenant :
- un premier module d'entrée (IM41) pour recevoir un premier flux de trafic montant (f1) d'un premier format à partir d'un premier autre noeud (N1) dudit réseau d'accès radio (RAN) ; et
- au moins un deuxième module d'entrée (IM42, IM43, IM44) pour recevoir un deuxième flux de trafic montant (pk2', pk3, f4) d'un deuxième format différent dudit premier format,
dans lequel :
- ledit premier module d'entrée (IM41) est configuré pour traiter ledit premier flux de trafic montant (f1) générant ainsi des premiers paquets (pk1) d'un format de paquet prédéterminé, et pour inclure dans chacun desdits premiers paquets (pk1) une première information (p1) indiquant une qualité de service dudit premier flux de trafic montant (f1) ;
- ledit au moins un deuxième module d'entrée (IM42, IM43, IM44) est configuré pour traiter ledit deuxième flux de trafic montant (pk2', pk3, f4) générant ainsi des deuxièmes paquets (pk2, pk3, pk4) dudit format de paquet prédéterminé, et pour inclure dans chacun desdits deuxièmes paquets (pk2, pk3, pk4) une deuxième information (p2, p3, p4) indiquant une qualité de service dudit deuxième flux de trafic montant (pk2', pk3, f4) ; et
- ledit noeud (N4) comprend en outre un commutateur de paquets (PS4) configuré pour multiplexer lesdits premiers paquets (pk1) et lesdits deuxièmes paquets (pk2, pk3, pk4) conformément à ladite première information (p1) et au moins à ladite deuxième information (p2, p3, p4) entraînant ainsi un flux de paquets montant de sortie dudit format de paquet prédéterminé (P4), et
- ledit noeud (N4) comprend un module de sortie (OM4) configuré pour délivrer en sortie ledit flux de paquets montant dudit format de paquet prédéterminé (P4) à partir dudit noeud (N4) dans un sens montant dudit réseau d'accès radio (RAN).

2. Noeud (N4) selon la revendication 1, dans lequel ledit deuxième module d'entrée (IM44) est en outre configuré, lorsque ledit premier flux de trafic montant (f4) comprend un flux de multiplexage par répartition dans le temps, pour rejeter lesdits deuxièmes paquets (pk4) comprenant des parties dudit deuxième flux de trafic montant (f4) qui ne transportent aucun trafic.

3. Noeud (N4) selon la revendication 1, dans lequel ledit deuxième module d'entrée (IM42) est en outre configuré, lorsque ledit deuxième flux de trafic montant (pk2') comprend des troisièmes paquets (pk2') d'un format de paquet différent dudit format de paquet prédéterminé, pour encapsuler lesdits troisièmes paquets (pk2') dans lesdits deuxièmes paquets (pk2) dudit format de paquet prédéterminé.

4. Noeud (N4) selon l'une quelconque des revendications précédentes, dans lequel ledit deuxième module d'entrée (IM42, IM43) est configuré pour recevoir ledit deuxième flux de trafic montant (pk2', pk3) à partir d'un deuxième autre noeud (N2, N3) dudit réseau d'accès radio (RAN).

5. Noeud (N4) selon l'une quelconque des revendications 1 à 3, dans lequel ledit noeud (N4) comprend en outre un dispositif d'accès (A4) ayant une zone de couverture et étant configuré pour échanger un trafic avec une pluralité de terminaux radio situés dans ladite zone de couverture, et dans lequel ledit au moins un deuxième module d'entrée (IM44) est configuré pour recevoir ledit deuxième flux de trafic montant (f4) à partir dudit dispositif d'accès (A4).

6. Réseau d'accès radio (RAN) comprenant un noeud (N4) selon l'une quelconque des revendications 1 à 5.

7. Procédé de traitement d'un trafic au niveau d'un noeud (N4) d'un réseau d'accès radio (RAN), comprenant les étapes suivantes :
a) recevoir un premier flux de trafic montant (f1) d'un premier format à partir d'un premier autre noeud (N1) dudit réseau d'accès radio (RAN) ; et
b) recevoir au moins un deuxième flux de trafic montant (pk2', pk3, f4) d'un deuxième format différent dudit premier format,
**caractérisé en ce qu'**il comprend en outre les étapes suivantes :
c) traiter ledit premier flux de trafic montant (f1) générant ainsi des premiers paquets (pk1) d'un format de paquet prédéterminé ;
d) inclure dans au moins un desdits premiers paquets (pk1) une première information (p1) indiquant une qualité de service dudit premier flux de trafic montant (f1) ;
e) traiter ledit au moins un deuxième flux de trafic montant (pk2', pk3, f4) générant ainsi des deuxièmes paquets (pk2, pk3, pk4) dudit format de paquet prédéterminé ;
f) inclure dans au moins un desdits deuxièmes paquets (pk2, pk3, pk4) une deuxième information (p2, p3, p4) indiquant une qualité de service dudit deuxième flux de trafic montant (pk2', pk3, f4) ;
g) multiplexer lesdits premiers paquets (pk1) et lesdits deuxièmes paquets (pk2, pk3, pk4) conformément à ladite première information (p1) et au moins à ladite deuxième information (p2, p3, p4) entraînant ainsi un flux de paquets montant de sortie dudit format de paquet prédéterminé (P4) ; et
h) délivrer en sortie ledit flux de paquets montant dudit format de paquet prédéterminé (P4) à partir dudit noeud (N4) dans un sens montant dudit réseau d'accès radio (RAN).

8. Procédé selon la revendication 7, dans lequel ladite étape e) comprend en outre, lorsque ledit premier flux de trafic montant (f4) comprend un flux de multiplexage par répartition dans le temps, le rejet desdits deuxièmes paquets (pk4) comprenant des parties dudit deuxième flux de trafic montant (f4) qui ne transportent aucun trafic.

9. Procédé selon la revendication 7, dans lequel ladite étape e) comprend en outre, lorsque ledit deuxième flux de trafic montant (pk2') comprend des troisièmes paquets (pk2') d'un format de paquet différent dudit format de paquet prédéterminé, l'encapsulation desdits troisièmes paquets (pk2') dans lesdits deuxièmes paquets (pk2) dudit format de paquet prédéterminé.
